# EUROPÄISCHE PATENTANMELDUNG

(11) **EP 3 337 187 A1**
(43) Veröffentlichungstag der Anmeldung: **20.06.2018**
(21) Anmeldenummer: 17199797.6
(22) Anmeldetag: 02.11.2017
(51) Int. Cl.: H04R 25/00, G10L 21/028, G10L 17/22

(54) **VERFAHREN ZUM BETRIEB EINES HÖRGERÄTES**

(30) Priorität: 15.12.2016 DE 102016225204
(71) Anmelder: Sivantos Pte. Ltd., Singapore 539775 (SG)
(72) Erfinder: KAMKAR-PARSI, Homayoun, 91058 Erlangen (DE); LUGGER, Marko, 91056 Erlangen (DE)
(74) Vertreter: FDST Patentanwälte

(57) **Zusammenfassung**

Die Erfindung nennt ein Verfahren (1) zum Betrieb eines Hörgerätes (2), welches wenigstens einen ersten Eingangswandler (10) und einen zweiten Eingangswandler (12) umfasst, wobei der erste Eingangswandler (10) aus einem Schallsignal (14) der Umgebung ein erstes Eingangssignal (16) generiert und der zweite Eingangswandler (12) aus dem Schallsignal (14) ein zweites Eingangssignal (18) generiert, wobei einer ersten Signalquelle (22) eine erste Richtung (26) zugeordnet wird, wobei anhand des ersten Eingangssignals (16) und des zweiten Eingangssignals (18) ein in der ersten Richtung (26) ausgerichtetes erstes Richtsignal (30) gebildet wird, und wobei wenigstens Signalanteile (34) des ersten Richtsignals (30) auf das Vorhandensein eines Nutzsignals von einer hinsichtlich der Art vorgegebenen Nutzsignalquelle (6) untersucht werden.

## Beschreibung

Die Erfindung betrifft ein Verfahren zum Betrieb eines Hörgerätes, welches wenigstens einen ersten Eingangswandler und einen zweiten Eingangswandler umfasst, wobei der erste Eingangswandler aus einem Schallsignal der Umgebung ein erstes Eingangssignal generiert und der zweite Eingangswandler aus dem Schallsignal ein zweites Eingangssignal generiert, und wobei anhand des ersten Eingangssignals und des zweiten Eingangssignals ein in einer ersten Richtung ausgerichtetes erstes Richtsignal gebildet wird.

In der Anwendung von Hörgeräten stellt die Handhabung von Gesprächssituationen eines der Kernprobleme dar. Dies liegt zunächst einmal an dem Umstand, dass dem Benutzer eines Hörgerätes wichtige Informationen oftmals im persönlichen Gespräch vermittelt werden. Schon allein zum Zweck einer möglichst zuverlässigen Informationsübertragung gilt es daher, der Verständlichkeit von Sprachen für den Benutzer eines Hörgeräts eine besondere Bedeutung beizumessen. Andererseits wird jedoch gerade die Sprachverständlichkeit oftmals schon dadurch beeinträchtigt, dass typische Gesprächssituationen von einem hohen Anteil an Neben- und Störgeräuschen überlagert sind, wie es beispielsweise bei einer Konversation mit mehreren Gesprächspartnern der Fall sein kann, welche sich nicht nur geordnet nacheinander äußern, oder bei einem Zwiegespräch in einem geschlossenen Raum, in welchem weitere Personengruppen ihrerseits durch Gespräche zu einem erhöhten Geräuschpegel beitragen (sogenannte "Cocktail-Party"-Hörsituation).

Zur Verbesserung der Sprachverständlichkeit des Signals eines Gesprächspartners wird in modernen Hörgeräten häufig ein Richtmikrophonie-Algorithmus angewandt, durch welchen eine schmale Richtcharakteristik, z.B. ein Richtkegel, in Richtung des Gesprächspartners ausgerichtet wird. Ein derartiger Richtkegel als Filter über die Eingangssignale des Hörgerätes führt dazu, dass das Sprachsignal des Gesprächspartners verstärkt wird, während Geräusche, welche aus einer anderen Richtung stammen, erheblich unterdrückt werden.

Für eine Hörsituation, in welcher sich der Gesprächspartner eines Benutzers eines Hörgerätes relativ zum Benutzer in Bewegung befindet, reichen bisherige Algorithmen zur Verbesserung der Sprachverständlichkeit, welche Hintergrundgeräusche mittels einer Richtcharakteristik ausblenden, im Normalfall nicht aus, da die entsprechende Richtcharakteristik laufend an die sich ändernde Position des Gesprächspartners angepasst werden müsste, was jedoch gerade dann zu Komplikationen führt, wenn der sich bewegende Gesprächspartner nicht der einzige Sprecher in der Nähe des Benutzers ist, und somit eine Erkennung der Position des Gesprächspartners aufgrund der Anwesenheit der anderen Sprecher erheblich erschwert wird. Zudem ist hierbei nicht nur die Ermittlung der Position des sich bewegenden Gesprächspartners von hoher rechnerischer Komplexität, sondern aufgrund der in einem Hörgerät begrenzten, zur Verfügung stehenden Ressourcen wird auch die Robustheit einer sprecherspezifischen Unterdrückung der Hintergrundgeräusche für bewegliche Sprecher zu einem erhebliche Problem, das heißt, dass bei einem nicht hinreichend robusten Algorithmus die Position des sich bewegenden Gesprächspartners verloren geht und keine zufriedenstellende Rauschunterdrückung mehr stattfinden kann. Erschwerend kommt hierbei hinzu, dass eine Verbesserung der Sprachqualität eines Gesprächspartners mittels einer die Hintergrundgeräusche ausblendenden Richtcharakteristik umso wichtiger wird, je geringer das Signal-zu-Rausch-Verhältnis ("signal to noise ratio", SNR) des Sprachsignals ist. Gerade ein niedriges SNR führt jedoch zu Problemen bei der Erfassung der Position eines sich bewegenden Gesprächspartners bzw. beim Versuch einer Erfassung des sich bewegenden Gesprächspartners mittels einer Richtcharakteristik.

Die besagten Probleme sind dabei jedoch nicht nur auf die Gesprächsbeiträge eines Gesprächspartners beschränkt, sondern können für den Benutzer eines Hörgerätes generell immer dann auftreten, wenn eine derart nach an sich bekannte oder erkennbare Schallquelle in einer Relativbewegung zum Benutzer verfolgt werden soll, also beispielsweise ein Haustier in einem Park oder ein motorisierter Verkehrsteilnehmer im Straßenverkehr.

Die DE 10 2013 215 131 A1 nennt für ein Hörgerät die Bildung eines Richtsignals aus wenigstens zwei Mikrofonsignalen, das Erfassen eines einsetzenden akustischen Signals im Richtsignal sowie eine Bewertung des akustischen Signals dahingehend, ob es sich bei diesem z.B. um Sprache, Musik, Lärm o.ä. handelt.

Der Erfindung liegt daher die Aufgabe zugrunde, für ein Hörgerät ein Verfahren anzugeben, welches es erlaubt, auf möglichst einfache und ressourcenschonende Weise in Anwesenheit mehrerer Signalquellen oder erheblicher Hintergrundgeräusche eine vorgegebene Nutzsignalquelle zu lokalisieren.

Die genannte Aufgabe wird erfindungsgemäß gelöst durch ein Verfahren zum Betrieb eines Hörgerätes, welches wenigstens einen ersten Eingangswandler und einen zweiten Eingangswandler umfasst, wobei der erste Eingangswandler aus einem Schallsignal der Umgebung ein erstes Eingangssignal generiert und der zweite Eingangswandler aus dem Schallsignal ein zweites Eingangssignal generiert, wobei einer ersten Signalquelle eine erste Richtung zugeordnet wird, wobei anhand des ersten Eingangssignals und des zweiten Eingangssignals ein in der ersten Richtung ausgerichtetes erstes Richtsignal gebildet wird, und wobei wenigstens Signalanteile des ersten Richtsignals auf das Vorhandensein eines Nutzsignals von einer hinsichtlich der Art vorgegebenen Nutzsignalquelle untersucht werden. Vorteilhafte und teils für sich gesehen erfinderische Ausgestaltungen sind in den Unteransprüchen und in der nachfolgenden Beschreibung dargelegt.

Als Eingangswandler ist hierbei generell ein akusto-elektrischer Wandler umfasst, welcher dazu eingerichtet ist aus einem Schallsignal ein entsprechendes elektrisches Signal zu generieren, also beispielsweise ein Mikrofon. Unter einem Richtsignal ist hierbei ein Signal zu verstehen, welches für einen Referenzschall einer Referenzschallquelle in einem bestimmten Winkelbereich eine besonders hohe Empfindlichkeit aufweist, und bei einer Anordnung der Referenzschallquelle außerhalb des gegebenen Winkelbereiches bezüglich des Referenzschalls eine erheblich reduzierte Empfindlichkeit aufweist. Insbesondere kann dabei das Richtsignal bei einem gegebenen Zentralwinkel ein Maximum in seiner Empfindlichkeit bezüglich des Referenzschalls aufweisen, wobei mit einem zunehmenden Winkelabstand vom Zentralwinkel die Empfindlichkeit gegenüber dem Referenzschall nachlässt.

Unter einer der Art nach vorgegebenen Nutzsignalquelle ist insbesondere eine Nutzsignalquelle umfasst, welche anhand der spektralen Eigenschaften von Signalanteilen des erzeugten Nutzsignals vorgegeben und/oder erkannt werden kann, also beispielsweise ein bestimmter Sprecher, dessen Sprachsignal im Hörgerät anhand seiner spektralen Eigenschaften sowie anhand der Verteilung von Formaten von den Sprachsignalen anderer möglicher Sprecher unterschieden werden kann.

Die Untersuchung wenigstens der Signalanteile des ersten Richtsignals auf das Vorhandensein des Nutzsignals ermöglicht dabei einerseits eine Verbesserung des Signal-zu-Rausch-Verhältnisses über das erste Richtsignal. Das erste Richtsignal kann dabei mittels einer geeignet ausgerichteten Richtcharakteristik derart gebildet werden, dass im Wesentlichen nur Signalanteile der ersten Signalquelle in das erste Richtsignal eingehen, und entsprechend Schall von anderen Signalquellen, sei es von weiteren, an der Hörsituation beteiligten Nutzsignalquellen, oder von Quellen von Störgeräuschen, erheblich unterdrückt werden. Hierdurch können die Signalanteile, welche der ersten Signalquelle entsprechen, gegenüber dem Hintergrundrauschen maßgeblich verstärkt werden, ohne dass dabei die spektralen Eigenschaften der Signalanteile beeinträchtigt würden.

Eine derartige Verbesserung des Signal-zu-Rausch-Verhältnisses durch das erste Richtsignal ermöglicht nun andererseits eine wesentlich robustere Ermittlung des Nutzsignals, bzw. eine Verbesserung der Identifikation der ersten Signalquelle mit der ihrer Art nach vorgegebenen Nutzsignalquelle. Eine derartige Identifikation insbesondere anhand eines Vergleiches der vorliegenden spektralen Eigenschaften der Signalanteile im ersten Richtsignal mit Referenzwerten, welche die Nutzsignalquelle ihrer Art nach definieren bzw. durch die Nutzsignalquelle vorgegeben sind, ins nämlich nun infolge des deutlich geringeren Rauschanteils im ersten Richtsignal robuster und weniger anfällig gegen Schwankungen in den Hintergrundgeräuschen, da diese für die Ermittlung der Präsenz der Nutzsignalquelle weitgehend ausgeblendet werden. Insbesondere kann hierbei das erste Richtsignal eine Richtcharakteristik aufweisen, deren Richtung maximaler Empfindlichkeit von der Frontalrichtung des Benutzers des Hörgerätes abweicht, so dass die erste Signalquelle für die Durchführung des Verfahrens insbesondere eine beliebige Winkelposition in der vorderen Hemisphäre des Benutzers einnehmen kann.

Bevorzugt wird bei einem Vorhandensein des Nutzsignals im ersten Richtsignal anhand des ersten Eingangssignals und des zweiten Eingangssignals eine Position der Nutzsignalquelle ermittelt, und bei einer ermittelten Änderung der Position der Nutzsignalquelle das erste Richtsignal in Richtung der geänderten Position der Nutzsignalquelle ausgerichtet. Insbesondere kann dies derart erfolgen, dass bei einem Vorhandensein des Nutzsignals im ersten Richtsignal die Nutzsignalquelle mit der ersten Signalquelle identifiziert wird, und somit die erste Richtung der Nutzsignalquelle als Position zugeordnet wird. Wird nun eine Veränderung im Signalpegel des ersten Richtsignals festgestellt, kann hieraus auf eine Veränderung der Position bzw. der Winkelposition der Nutzsignalquelle geschlossen werden, so dass die erste Richtung neu bestimmt wird. Dies kann dynamisch in Abhängigkeit von Verläufen des Signalpegels im ersten Richtsignal erfolgen, oder periodisch mit vorgegebenen Zeitabständen. Hierdurch wird ermöglicht, eine der Art nach bekannte Nutzsignalquelle, welche sich relativ zum Benutze4r bewegt, anhand der dem Hörgerät bekannten Parameter im Raum zu verfolgen, und entsprechend ein Richtsignal zur Verbesserung der Signalqualität und des Signal-zu-Rausch-Verhältnisses dauerhaft auf die Nutzsignalquelle auszurichten.

Günstigerweise wird bei einem Vorhandensein des Nutzsignals im ersten Richtsignal die Position der Nutzsignalquelle laufend aktualisiert. Bevorzugt wird in diesem Fall zudem auch die Ausrichtung des ersten Richtsignals laufend aktualisiert. Insbesondere kann hierdurch ermöglicht werden, eine Aktualisierung der Ausrichtung des ersten Richtsignals, welche infolge des hohen Rechenaufwandes zu einer erhöhten Leistungsaufnahme des Hörgerätes führt, nur für den Fall durchzuführen, dass ein Nutzsignal im ersten Richtsignal vorhanden ist, so dass hierdurch Batterieleistung gespart werden kann.

Erfindungsgemäß werden für die Untersuchung wenigstens der Signalanteile des ersten Richtsignals auf das Vorhandensein des Nutzsignals spektrale Kenngrößen der Nutzsignalquelle vorgegeben, wobei ein Wahrscheinlichkeitswert dafür ermittelt wird, dass im ersten Richtsignal Signalkomponenten enthalten sind, welche mit den spektralen Kenngrößen kompatibel sind, und bei einem Überschreiten eines vorgegebenen ersten Grenzwertes durch den Wahrscheinlichkeitswert auf ein Vorhandensein des Nutzsignals geschlossen wird. Insbesondere kann dies über den Log-Likelihood-Quotiententest (LLR) eines Gaußsches Mischungs-Modells (GMM) erfolgen, in welchem Kenngrößen über die Mel-Frequenz-Cepstrum-Koeffizienten (MFCC) ermittelt oder approximiert werden, oder über eine GMM-Supervektoren-Support vector machine.

Da die Nutzsignalquelle ihrer Art nach vorgegeben ist, bedeutet dies, dass einerseits spektrale Kenngrößen, welche für die Nutzsignalquelle charakteristisch insbesondere im Hinblick auf eine Unterscheidung von anderen Signalquellen sind, für die Untersuchung des ersten Richtsignals herangezogen werden können. Andererseits wird nun anhand der realen Signalanteile des ersten Richtsignals über eine geeignete Vergleichsmethode ein Wahrscheinlichkeitswert dafür ermittelt, dass die betreffenden Signalkomponenten von der Nutzsignalquelle stammen. Dies kann ausgeschlossen werden, wenn die entsprechenden Signalkomponenten aufgrund ihrer spektralen Eigenschaften mit dem Nutzsignal nicht kompatibel sind. Bei zunehmender Übereinstimmung bzw. Kompatibilität der spektralen Parameter der Signalkomponenten des ersten Richtsignals und des vorgegebenen Nutzsignals steigt entsprechend der Wahrscheinlichkeitswert an, so dass oberhalb eines vorgegebenen Grenzwertes für den Wahrscheinlichkeitswert davon ausgegangen werden kann, dass die Signalanteile tatsächlich von der gewünschten Nutzsignalquelle stammen. Der Wahrscheinlichkeitswert kann dabei insbesondere von der Hörsituation oder von einem Rauschpegel abhängen.

Günstigerweise werden dabei die spektralen Kenngrößen vor einer Inbetriebnahme des Hörgeräts in eine Datenbank des Hörgeräts abgelegt. Unter der Inbetriebnahme sind hierbei die erstmalige Inbetriebnahme sowie auch eine Inbetriebnahme nach einer längeren, mit einem zwischenzeitlichen Ausschalten des Hörgerätes verbundenen Betriebspause umfasst. Das Ablegen kann dabei insbesondere bei einer Voreinstellung und/oder Anpassung des Hörgerätes durch einen Hörgeräteakustiker erfolgen. Hierfür können als voreingestellte Nutzsignalquellen die häufigsten Gesprächspartner des Benutzers gewählt werden, von welchen der Benutzer jeweils eine Anzahl an Klangproben liefert. Die Klangproben können dabei insbesondere durch ein externes Gerät wie ein Smartphone oder durch das Hörgerät selbst, welches bevorzugt mittels eines externen Gerätes wie z.B. einer Fernbedienung oder einem Smartphone speziell dafür angewiesen wird, aufgezeichnet worden sein.

Zweckmäßigerweise identifiziert ein Benutzer des Hörgeräts im Betrieb das Nutzsignal der Nutzsignalquelle durch eine Benutzereingabe, und die spektralen Kenngrößen werden anhand des ersten Richtsignals ermittelt und in eine Datenbank abgelegt. Die Identifikation kann dabei im laufenden Betrieb des Hörgeräts, die Benutzereingabe insbesondere durch eine Fernbedienung oder ein Smartphone erfolgen. Dies ist insbesondere vorteilhaft, da bei einer Voreinstellung meist nicht die Kenngrößen aller möglichen relevanten Nutzsignalquellen bekannt sind, und somit der Benutzer ohne weiteres der entsprechenden Datenbank neue Nutzsignalquellen hinzufügen kann, welche für ihn aufgrund der aktuellen Hörsituation gerade relevant werden.

Bevorzugt wird im Betrieb des Hörgeräts das Signal der ersten Signalquelle als Nutzsignal identifiziert und die erste Signalquelle als Nutzsignalquelle vorgegeben, wobei die spektralen Kenngrößen der Nutzsignalquelle anhand des ersten Richtsignals ermittelt werden. Insbesondere erfolgt dabei die Identifikation des Signals der ersten Signalquelle als Nutzsignal anhand eines zeitlichen Mittelwertes des Signalpegels. Dies bedeutet, dass beispielsweise in einer Gesprächssituation ein gleichbleibend hoher, lange Zeit anhaltender oder wiederkehrender Signalpegel für die Gesprächsbeiträge eines Gesprächspartners als ein neues, gerade relevantes Nutzsignal identifiziert wird, und entsprechend die spektralen Kenngrößen seiner Stimme und Sprache für nachfolgende Vergleiche ermittelt und entsprechend abgelegt werden. Dies ermöglicht eine vollständig automatische Erfassung der spektralen Kenngrößen einer Nutzsignalquelle, ohne dass hierbei der Benutzer der Erfassung selbst eine besondere Aufmerksamkeit beizumessen braucht.

Zweckmäßigerweise wird anhand des ersten Richtsignals ein Ausgangssignal gebildet wird, welches von wenigstens einem Ausgangswandler des Hörgeräts in ein Schallsignal umgewandelt. Als Ausgangswandler ist generell ein elektrischerakustischer Wandler umfasst, welcher dazu eingerichtet ist aus einem elektrischen Signal ein entsprechendes Schallsignal zu erzeugen, beispielsweise ein Lautsprecher oder ein Schallerzeuger zur Knochenleitung. Unter einer Bildung des Ausgangssignals anhand des ersten Richtsignals ist insbesondere zu verstehen, dass in die für das Hörgerät spezifische Signalverarbeitung das erste Richtsignal unmittelbar als Eingangsgröße verwendet wird, wobei als resultierendes Signal der für das Hörgerät spezifischen Signalverarbeitung das Ausgangssignal steht. Hierdurch geht die zeitlich-räumliche Information, wie sie im ersten Richtsignal insbesondere bezüglich der Signalquelle enthalten ist, in das für den Benutzer des Hörgerätes hörbare Schallsignal ein, so dass infolge der Nachbildung der realen Bewegung des Signalquelle mittels des ersten Richtsignals ein besonders realistisches Hörempfinden beim Benutzer hervorgerufen werden kann.

In einer weiter vorteilhaften Ausgestaltung werden als Nutzsignalquelle ein bestimmter Sprecher und als Nutzsignal ein menschliches Sprachsignal des Sprechers vorgegeben. Gerade für den Fall eines Sprechers als Nutzsignalquelle lässt sich das Verfahren besonders vorteilhaft anwenden, da einerseits ein bestimmtes Sprachsignal anhand einer Vielzahl an für die Stimme und für die Sprache charakteristischen spektralen Parametern identifizierbar ist, und andererseits in einer lebhaften Gesprächssituation ein Gesprächspartner mitunter in Bewegung sein kann, was durch die hier vorgeschlagene Verfolgung des Gesprächspartners durch das erste Richtsignal zur Verbesserung der Verständlichkeit des Sprachsignals kompensiert werden kann.

Günstigerweise werden dabei für das Sprachsignal des bestimmten Sprechers individuelle Korrekturparameter vorgegeben, wobei bei einem Vorhandensein des Sprachsignals des bestimmten Sprechers im ersten Richtsignal das erste Richtsignal und/oder ein Zwischensignal, welches in das Ausgangssignal eingeht, anhand der individuellen Korrekturparameter korrigiert werden. Hierbei wird in vorteilhafter Weise ausgenutzt, dass einerseits der bestimmte Sprecher anhand für seine Stimme charakteristischer spektraler Parameter durch das Hörgerät durch das vorgeschlagene Verfahren identifizier- und lokalisierbar ist, und dass andererseits sein Sprachsignal gezielt verstärkt werden kann, indem beispielsweise für schwächer ausgeprägte Formaten o.ä. die entsprechenden Frequenzen besonders verstärkt werden können.

Besonders bevorzugt werden die individuellen Korrekturparameter für den bestimmten Sprecher vor einer Inbetriebnahme des Hörgeräts in eine Datenbank des Hörgeräts abgelegt werden, und/oder anhand des ersten Richtsignals und einer Benutzereingabe ermittelt und in eine Datenbank abgelegt werden. Unter der Inbetriebnahme sind hierbei die erstmalige Inbetriebnahme sowie auch eine Inbetriebnahme nach einer längeren, mit einem zwischenzeitlichen Ausschalten des Hörgerätes verbundenen Betriebspause umfasst. Die Benutzereingabe kann dabei insbesondere über eine Fernbedienung oder ein Smartphone erfolgen. Gerade bei einer Ablage der Daten im Rahmen einer Voreinstellung vor einer Inbetriebnahme lassen sich entsprechende Korrekturparameter für den bestimmten Sprecher besonders genau in Abstimmung mit einem möglichen Hörverlust des Benutzers anpassen, so dass der hierfür benötigte Speicherplatz auf dem Hörgerät optimiert werden kann. Die Ablage der Korrekturparameter auf eine Benutzereingabe hin hat den Vorteil, dass der Benutzer die Ablage allein und in jedwedem Umfeld durchführen kann.

Als vorteilhaft erweist es sich, wenn wenigstens Signalanteile des ersten Richtsignals an eine externe Einheit übertragen werden, wobei die Signalanteile des ersten Richtsignals in der externen Einheit auf das Vorhandensein des Nutzsignals von einer hinsichtlich der Art vorgegebenen Nutzsignalquelle untersucht werden, und wobei das Ergebnis der Untersuchung des ersten Richtsignals an das Hörgerät übermittelt wird. Dies ermöglicht es, gerade die rechenintensiven Schritte, welche für eine Identifikation bzw. Verifikation der Nutzsignalquelle durch den Vergleich der entsprechenden spektralen Parameter erforderlich sind, außerhalb des Hörgerätes auf einem leistungsfähigeren Prozessor durchführen zu lassen, so dass die Prozessoren des Hörgerätes nur auf den für ein Hörgerät üblichen Betrieb, welcher auch die Bildung von Richtsignalen umfasst, ausgelegt zu sein brauchen.

Vorteilhafterweise wird das erste Richtsignal in die Zeit-Frequenz-Domäne transformiert und/oder einzelne Zeitabschnitte des ersten Richtsignals in der Zeit-Domäne und/oder der Zeit-Frequenz-Domäne auf ein Signal-zu-Rausch-Verhältnis hin untersucht, wobei zur Untersuchung auf das Vorhandensein des Nutzsignals nur Zeitabschnitte mit einem Signal-zu-Rausch-Verhältnis herangezogen werden, welches über einem vorgegebenen zweiten Grenzwert liegt. Hierdurch werden Signalanteile vernachlässigt, welche für die Untersuchung des ersten Richtsignals ohnehin keine hinreichend hohe Signalqualität aufweisen, wodurch insgesamt Rechenleistung eingespart werden kann.

In einer vorteilhaften Ausgestaltung wird die erste Richtung zur Zuordnung anhand des ersten Eingangssignals und des zweiten Eingangssignals ermittelt. Je nach Beschaffenheit der Signalquelle und Art der Hörsituation kann eine Zuordnung einer Raumrichtung zu einer Signalquelle beispielsweise auch über eine Voreinstellung erfolgen, beispielsweise anhand der Annahme, dass ein Benutzer des Hörgerätes in den meisten Fällen seines Blickrichtung in Richtung einer der Nutzsignalquellen liegen wird, sodass als eine erste Richtung die Frontalrichtung vorgegeben werden kann. Dies ist jedoch für viele Hörsituationen nicht zweckmäßig. Daher weist es sich von Vorteil, die erste Signalquelle anhand des ersten Eingangssignals und des zweiten Eingangssignals zu lokalisieren, welche ohnehin zur Verfügung stehen. Die Ermittlung der ersten Richtung kann dabei insbesondere näherungsweise erfolgen, beispielsweise in Form eines Scans über eine Mehrzahl von Winkelbereichen.

Zweckmäßigerweise werden hierbei anhand des ersten Eingangssignals und des zweiten Eingangssignals eine Mehrzahl an winkelabhängigen Richtcharakteristiken mit einem jeweils festem Zentralwinkel und einer gegebenen Winkelaufweitung gebildet, wobei die Signalanteile in den einzelnen Richtcharakteristiken auf das Vorhandensein des Signals der ersten Signalquelle hin untersucht werden, und wobei zu einer in einer bestimmten Richtcharakteristik ermittelten ersten Signalquelle der entsprechende Zentralwinkel als erste Richtung zugeordnet wird. Dies erlaubt eine besonders präzise und gegen Hintergrundrauschen robuste Lokalisierung der ersten Signalquelle, da hierfür keine störungsanfälligen Laufzeit- oder Phasenmessungen verwendet werden, und die erste Richtung für die erste Signalquelle anhand der vorliegenden Signale - des ersten Eingangssignals und des zweiten Eingangssignals - vorgegeben werden kann, ohne dass dafür weitere Annahmen - z.B. frontale Positionierung o.ä. - notwendig wären, welche ggf. nicht der realen Hörsituation entsprechen.

Vorteilhafterweise entspricht hierbei ein Winkelabstand zweier bezüglich ihrer jeweiligen Zentralwinkel benachbarter Richtcharakteristiken der halben Winkelaufweitung entspricht. Insbesondere weisen je zwei benachbarte Richtcharakteristiken die gleiche Winkelaufweitung auf. Für den Fall, dass die einzelnen Richtcharakteristiken durch Richtkegel gebildet werden, deren Empfindlichkeit in Richtung des Zentralwinkels maximal ist, und mit zunehmendem Winkelabstand vom Zentralwinkel abnimmt, bedeutet dies insbesondere, dass zu jeder einzelnen Richtcharakteristik ein Winkel angegeben werden kann, für welchen die Empfindlichkeit bezüglich eines Testsignals um einen bestimmten Faktor gegenüber dem Maximalwert beim Zentralwinkel abgesunken ist, zum Beispiel 6 dB oder 10 dB. Ein derartiger Winkel wird nun der entsprechenden Richtcharakteristik als halbe Winkelaufweitung zugeordnet, und der Zentralwinkel der benachbarten Richtcharakteristik wird entsprechend als der doppelte Wert dieses Winkels gewählt. Für den Fall, dass als einzelne Richtcharakteristiken jeweils kerbenförmige Abschwächungen der Empfindlichkeit mit einem Minimum beim Zentralwinkel gewählt werden, kann entsprechendes gelten, wobei für die Definition der Winkelaufweitung anstatt der Abschwächung der Empfindlichkeit gegenüber dem Maximalwert beim Zentralwinkel ein Anheben der Empfindlichkeit gegenüber dem Minimalwert beim Zentralwinkel herangezogen wird. Hierdurch kann für einen gewünschten, breiteren Winkelbereich eine weitgehend vollständige Überdeckung durch die einzelnen Richtcharakteristiken erzielt werden, während infolge Überlapps der einzelnen Richtcharakteristiken bis zum jeweils nächsten Zentralwinkel eine Nutzsignalquelle immer wenigstens einer der Richtcharakteristiken klar zugeordnet werden kann, wobei durch den Überlapp auch Winkelpositionen zwischen zwei benachbarten Zentralwinkeln auflösbar sind.

Als vorteilhaft erweist es sich dabei, wenn die einzelnen Richtcharakteristiken jeweils durch eine kerbenförmige Empfindlichkeitscharakteristik vorgegeben werden, welche durch wenigstens zwei Bedingungen bestimmt werden, so dass durch die wenigstens zwei Bedingungen jeweils ein Zentralwinkel und eine Winkelaufweitung der Empfindlichkeitscharakteristik festgelegt werden, und wobei die Signalanteile in den einzelnen Richtcharakteristiken jeweils anhand einer relativen Abschwächung durch die Empfindlichkeitscharakteristik auf das Vorhandensein des Signals der ersten Signalquelle untersucht werden.

Unter einer kerbenförmigen Empfindlichkeitscharakteristik ist hierbei eine Richtcharakteristik zu verstehen, welche bezüglich eines Testsignals von gegebener Lautstärke beim Zentralwinkel die maximale Abschwächung der Empfindlichkeit aufweist, wobei die Empfindlichkeit mit zunehmendem Winkelabstand vom Zentralwinkel zunimmt. Der Grad dieser Zunahme der Empfindlichkeit in Abhängigkeit vom Winkelabstand zum Zentralwinkel definiert dann die Winkelaufweitung. Befindet sich eine Signalquelle in Richtung eines Zentralwinkels einer derartigen Richtcharakteristik, oder im Rahmen der Winkelauflösung in unmittelbarer Nähe zum Zentralwinkel, also innerhalb der "Kerbe" der Empfindlichkeitscharakteristik, so werden die Signalanteile des Nutzsignals durch die Richtcharakteristik wesentlich abgeschwächt, während Signalanteile von anderen Signalquellen, welche sich außerhalb der Winkelaufweitung um den Zentralwinkel der besagten Richtcharakteristik befinden, weitgehend erhalten bleiben. Dies kann nun zum Ermitteln einer Präsenz einer Signalquelle im Bereich der entsprechenden Richtcharakteristik herangezogen werden.

Als weiter vorteilhaft erweist es sich, wenn einer zweiten Signalquelle eine zweite Richtung zugeordnet wird, wobei anhand des ersten Eingangssignals und des zweiten Eingangssignals ein in der zweiten Richtung ausgerichtetes zweites Richtsignal gebildet wird, und wobei anhand des ersten Richtsignals und des zweiten Richtsignals ein Ausgangssignal gebildet wird, welches von wenigstens einem Ausgangswandler des Hörgeräts in ein Schallsignal umgewandelt wird.

Die Bildung des Ausgangssignals anhand des ersten Richtsignals und anhand des zweiten Richtsignals erlaubt es, für ein von der ersten Signalquelle erzeugtes erstes Signal und für ein von der zweiten Signalquelle erzeugtes zweites Signal das Signal-zu-Rausch-Verhältnis zu verbessern, indem Störgeräusche, welche insbesondere aus einem Winkelbereich zwischen der ersten Signalquelle und der zweiten Signalquelle stammen, sowohl durch das erste Richtsignal als auch durch das zweite Richtsignal entsprechend unterdrückt werden können und somit in das Ausgangssignal keinen merklichen Eingang finden. Insbesondere verbessert sich hierdurch für einen Benutzer des Hörgerätes die Qualität des Ausgangssignals bezüglich eines in das erste Eingangssignal und in das zweite Eingangssignal eingehenden Umgebungsrauschens, wenn der Benutzer sich in einem Gespräch mit mehr als einem Gesprächspartner befindet, wobei wenigstens einer der Gesprächspartner in Bewegung ist, und das Gespräch von Hintergrundgeräuschen überlagert wird. Den Gesprächspartnern werden dann die erste bzw. zweite Richtung zugeordnet, und das erste bzw. zweite Richtsignal auf jeweils einen Sprecher ausgerichtet, sodass die Sprachbeiträge eines Sprechers durch das betreffende Richtsignal gegenüber den Umgebungsgeräuschen verstärkt werden. Durch die Ausrichtung des ersten Richtsignals und des zweiten Richtsignals auf jeweils einen Sprecher wird zudem erreicht, dass der Benutzer Sprachaktivitäten der Gesprächspartner nicht durch Kopfbewegungen mit zu verfolgen braucht, um so etwa über eine fest vorgegebene Richtcharakteristik eine Verbesserung der Sprachverständlichkeit aufrecht erhalten zu können.

Bevorzugt gehen hierbei das erste Richtsignal und das zweite Richtsignal als eine Superposition, besonders bevorzugt eine lineare Superposition, in das Ausgangssignal ein. Insbesondere bedeutet dies, dass dabei eine für das Hörgerät spezifische Signalverarbeitung des ersten Richtsignals und des zweiten Richtsignals erfolgen kann, und aus den jeweils resultierenden Signalen über eine lineare Superposition das Ausgangssignal gebildet wird, oder dass eine lineare Superposition des ersten Richtsignals und des zweiten Richtsignals in die für das Hörgerät spezifische Signalverarbeitung eingeht, und über die Signalverarbeitung das Ausgangssignal gebildet wird. Gerade für zwei oder mehr Nutzsignalquellen ist eine lineare Superposition der auf die Nutzsignalquellen ausgerichteten Richtsignale eine besonders gute Entsprechung der realen Hörsituation, in welcher das erste Nutzsignal und das zweite Nutzsignal auch einer linearen Superposition unterliegen, und das resultierende Schallsignal für den Benutzer durch das Hörgerät zur Verbesserung der Signalqualität vom Hintergrundrauschen zu bereinigen ist.

Besonders bevorzugt werden dabei für die lineare Superposition jeweils Linearfaktoren für das erste Richtsignal und für das zweite Richtsignal frequenzbandweise bestimmt. Insbesondere heißt das, dass die lineare Superposition in unterschiedlichen Frequenzbändern eine unterschiedliche Gewichtung des ersten Richtsignals und des zweiten Richtsignals vorsehen kann. Hierdurch kann möglichen spektralen Unterschieden zwischen der ersten Nutzsignalquelle und der zweiten Nutzsignalquelle Rechnung getragen werden, sodass beispielsweise in einem Frequenzband, in welchem nur eine der beiden Nutzsignalquellen nennenswerte Signalanteile aufweist, die entsprechende Gewichtung des auf die Nutzsignalquelle ausgerichteten Richtsignals höher ausfällt. Insbesondere im Fall, dass es sich bei der ersten bzw. der zweiten Nutzsignalquelle jeweils um Gesprächspartner handelt, können somit auch charakteristische spektrale Gegebenheiten der Stimmen der Gesprächspartner mit berücksichtigt werden.

Zweckmäßigerweise werden dabei wenigstens Signalanteile des zweiten Richtsignals auf das Vorhandensein eines Nutzsignals hin untersucht, wobei die Gewichtung des zweiten Richtsignals relativ zum ersten Richtsignal in der Superposition anhand des Vorhandenseins eines Nutzsignals im zweiten Richtsignal erfolgt. Beispielsweise kann in einer Gesprächssituation festgestellt werden, dass ein zweiter Sprecher in der Nähe ist, dessen Gesprächsbeiträgen in das Ausgangssignal mit einem höheren Gewicht eingehen, als wenn beispielsweise die zweite Signalquelle gegeben ist durch ein lokalisiertes Hintergrundgeräusch, wie z.B. einen Lautsprecher, welcher Musik wiedergibt. In letzterem Fall ist für eine angemessene räumliche Wahrnehmung auch die entsprechende Musik im richtigen Raumwinkelbereich in das Ausgangssignal aufzunehmen, jedoch der Sprecher bei der Gewichtung entsprechend gegenüber der Hintergrundmusik bevorzugt deutlich zu priorisieren.

Die Erfindung nennt weiter ein Hörgerät, insbesondere ein binaurales Hörgerät, umfassend wenigstens einen ersten Eingangswandler zur Erzeugung eines ersten Eingangssignals aus einem Schallsignal der Umgebung, einen zweiten Eingangswandler zur Erzeugung eines zweiten Eingangssignals aus dem Schallsignal, und eine Signalverarbeitungseinheit, welche zur Durchführung des vorbeschriebenen Verfahrens eingerichtet ist. Die für das Verfahren und seine Weiterbildungen genannten Vorteile können hierbei sinngemäß auf das Hörgerät übertragen werden.

Nachfolgend wird ein Ausführungsbeispiel der Erfindung anhand einer Zeichnung näher erläutert. Hierbei zeigt schematisch:

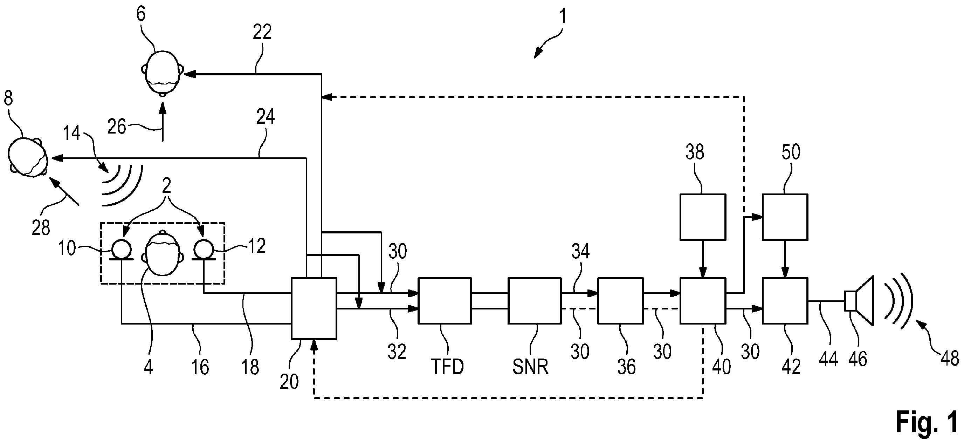

- Fig. 1: den Ablauf eines Verfahrens zur Verfolgung eines vorgegebenen, sich bewegenden Sprechers durch ein Richtsignal eines Hörgerätes.

In Fig. 1 ist schematisch der Ablauf eines Verfahrens 1 zum Betrieb eines Hörgerätes 2 dargestellt. Ein Benutzer 4 des Hörgerätes 2 befindet sich in einem Gespräch mit einem bestimmten Sprecher 6, welcher relativ zum Benutzer 2 in Bewegung ist, beispielsweise ab und an im Raum umherläuft, wobei dem Gespräch ein weiterer Gesprächspartner 8 beiwohnt, welcher vereinzelt Gesprächsbeiträge äußert, und das Gespräch zudem von Hintergrundgeräuschen überlagert ist.

Das Hörgerät 2 weist einen ersten Eingangswandler 10 und einen zweiten Eingangswandler 12 auf, welche jeweils als Mikrofone ausgebildet sind. Der erste Eingangswandler 10 erzeugt aus dem eingehenden Schallsignal 14 der Umgebung ein erstes Eingangssignal 16, der zweite Eingangswandler 12 erzeugt aus dem eingehenden Schallsignal 14 ein zweites Eingangssignal 18. In einem Lokalisierungsschritt 20 wird nun zunächst ermittelt, in welcher Richtung bzgl. der Frontalrichtung des Benutzers 4 überhaupt wesentliche Signalquellen positioniert sind. Dies kann beispielsweise dadurch erfolgen, dass anhand des ersten und des zweiten Eingangssignals 16, 18 eine Vielzahl an Richtcharakteristiken gebildet werden, welche auf jeweils einen anderen Zentrumswinkel hin ausgerichtet sind, also dort ein Maximum oder ein Minimum der Empfindlichkeit aufweisen. Anschließend werden anhand der Signalanteile für die jeweilige Richtcharakteristik akustische Kenngrößen gebildet, und die akustischen Kenngrößen zu den unterschiedlichen Winkeln miteinander verglichen, wodurch anschließend die Präsenz einer Signalquelle ermittelt werden kann.

Sind die Richtcharakteristiken beispielsweise jeweils kegelförmig ausgebildet, kann als Kenngröße der maximale Pegel - ggf. über ein geeignetes Zeitfenster gemittelt - verwendet werden. Liegt für bestimmte Richtsignale der maximale Pegel über einem Grenzwert, so wird nun vermutet, dass in der entsprechenden Richtung - welche dann im Rahmen der Winkelauflösung des Lokalisierungsschrittes mit dem Zentrumswinkel der Richtcharakteristik gleichgesetzt wird - eine Signalquelle vorhanden ist. Weisen die Richtcharakteristiken beispielsweise jeweils einen kerbenförmigen Verlauf der Empfindlichkeit auf, so dass beim Zentrumswinkel ein Minimum der Empfindlichkeit vorliegt, kann als Kenngröße der Pegel verwendet werden, welcher über den Gesamtpegel normiert wurde. Die Präsenz einer Signalquelle in einer Richtcharakteristik wird nun anhand einer Abschwächung des Pegels durch die Richtcharakteristik ermittelt, da der Gesamtpegel als Normierungsfaktor vom Minimum der Empfindlichkeit nicht betroffen bleibt, und eine Signalquelle im Bereich des Zentrumswinkels durch die Richtcharakteristik abgeschwächt wird.

Im vorliegenden Fall wird der bestimmte Sprecher 6 als erste Signalquelle 22, und der weitere Gesprächspartner 8 als zweite Signalquelle 24 ermittelt. Dem bestimmten Sprecher 6 wird als erste Richtung 26 die Richtung derjenigen Richtcharakteristik zugewiesen, für welche die akustische Kenngröße extremal ist. Vergleichbares gilt für die zweite Richtung 28, welche dem weiteren Gesprächspartner 8 zugewiesen wird.

Nun werden ein in der ersten Richtung 26 ausgerichtetes erstes Richtsignal 30 sowie ein in der zweiten Richtung 28 ausgerichtetes zweites Richtsignal 32 mit einer jeweils schmalen kegelförmigen Richtcharakteristik gebildet, um das Signal der ersten bzw. der zweiten Signalquelle 22, 24 vom Hintergrundrauschen abzuheben. Im Fall, dass der Lokalisierungsschritt 20 bereits anhand von kegelförmigen Richtcharakteristiken durchgeführt wurde, können als erstes bzw. zweites Richtsignal 30, 32 einfach Richtsignale mit den entsprechenden Richtcharakteristiken, in welchen die erste bzw. zweite Signalquelle 22, 24 lokalisiert wurden, gebildet bzw. weiterverwendet werden.

Das erste Richtsignal 30 und das zweite Richtsignal 32 werden jetzt jeweils in die Zeit-Frequenz-Domäne TFD transformiert, und anschließend jeweils Signalanteile des ersten und des zweiten Richtsignals 30, 32 in der Zeit-Frequenz-Domäne TFD auf ihr Signal-zu-Rausch-Verhältnis SNR hin untersucht. Es werden nur diejenigen Signalkomponenten 34 verwendet, für die das Signal-zu-Rausch-Verhältnis SNR einen vorgegebenen Grenzwert unterschreitet. Aus den vom ersten Richtsignal 30 abgeleiteten Signalkomponenten 34 werden nun Vektoren von charakteristischen Daten 36 gebildet. Die charakteristischen Daten 36 sind dabei derart, dass sie mit vorher abgelegten, spektralen Kenngrößen 38 zur Stimme des bestimmten Sprechers 6 in Relation gebracht werden können. Dies kann beispielsweise durch ein Wahrscheinlichkeitsmodell geschehen, welches anhand der Kompatibilität der charakteristischen Daten 36 mit den spektralen Kenngrößen 38 des bestimmten Sprechers 6 einen Wahrscheinlichkeitswert 40 dafür ermittelt, dass die erste Signalquelle 22 durch den bestimmten Sprecher 6 gegeben ist. Liegt der Wahrscheinlichkeitswert 40 oberhalb eines vorbestimmten Grenzwertes, so wird die erste Signalquelle 22 als der bestimmte Sprecher 6 identifiziert. Für eine weitere benutzerspezifische Signalverarbeitung 42 im Hörgerät 2, beispielsweise das Anheben des Pegels in bestimmten Frequenzbändern in Abhängigkeit von einem Audiogramm des Benutzers 4, kann nun direkt das erste Richtsignal 30 herangezogen werden. Das Ausgangssignal 44 der Signalverarbeitung 42 wird nun von wenigstens einem Ausgangswandler 46, im vorliegenden Fall gebildet durch einen Lautsprecher, in ein für den Benutzer 4 hörbares Schallsignal 48 umgewandelt.

Die Signalverarbeitung 42 kann dabei insbesondere auch eine sprecherspezifische Korrektur durch für den bestimmten Sprecher 6 individuelle Korrekturparameter 50 umfassen, bei welcher in einem vom ersten Richtsignal 30 abgeleiteten Zwischensignal anhand bekannter spektraler Parameter der Stimme des bestimmten Sprechers 6 bestimmte Frequenzbereiche, z.B. bei wichtigen Formanten, zur Verbesserung der Sprachverständlichkeit besonders hervorgehoben werden können.

Ist der bestimmte Sprecher 6 in der ersten Richtung 26 lokalisiert, so kann der Lokalisierungsschritt 20 periodisch wiederholt werden, um so bestimmten Sprecher 6 durch das erste Richtsignal 30 verfolgen zu können. Die Kontrolle über die charakteristischen Daten 36 und die spektralen Kenngrößen 38 stellt hierbei sicher, dass bei einer Neuausrichtung der ersten Richtung 26 weiterhin das erste Richtsignal 30 auf den bestimmten Sprecher 6 hin ausgerichtet bleibt. Kann dies nicht verifiziert werden, also ist das Schallsignal der Signalquelle, auf welche das erste Richtsignal 30 neu ausgerichtet wurde, nicht mit den spektralen Kenngrößen 38 des bestimmten Sprechers 6 kompatibel, so kann durch einen Neubeginn beim Lokalisierungsschritt 20 und die anschließenden Folgeschritte die aktuelle Position des bestimmten Sprechers 6 gesucht und dieser als erste gesuchte Signalquelle 22 verifiziert werden. Hierdurch kann der bestimmte Sprecher 6 dauerhaft vom ersten Richtsignal 30 verfolgt werden, so dass seine Sprachbeiträge über das erste Richtsignal 30 gegenüber dem Hintergrundrauschen verstärkt werden können. Durch den Vergleich der spektralen Kenngrößen 38 mit den charakteristischen Daten 38 kann sichergestellt werden, dass das erste Richtsignal dauerhaft auf den bestimmten Sprecher 6 - und nicht beispielsweise auf den weiteren Gesprächspartner 8 - ausgerichtet wird.

Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen.

### Bezugszeichenliste

- 1: Verfahren
- 2: Hörgerät
- 4: Benutzer
- 6: bestimmter Sprecher
- 8: weiterer Gesprächspartner
- 10: erster Eingangswandler
- 12: zweiter Eingangswandler
- 14: eingehendes Schallsignal (der Umgebung)
- 16: erstes Eingangssignal
- 18: zweites Eingangssignal
- 20: Lokalisierungsschritt
- 22: erste Signalquelle
- 24: zweite Signalquelle
- 26: erste Richtung
- 28: zweite Richtung
- 30: erstes Richtsignal
- 32: zweites Richtsignal
- 34: Signalkomponenten
- 36: charakteristische Daten
- 38: spektralen Kenngrößen
- 40: Wahrscheinlichkeitswert
- 42: Signalverarbeitung
- 44: Ausgangssignal
- 46: Ausgangswandler
- 48: Schallsignal
- 50: individueller Korrekturparameter

- TFD: Zeit-Frequenz-Domäne
- SNR: Signal-zu-Rausch-Verhältnis

## Patentansprüche

1. Verfahren (1) zum Betrieb eines Hörgerätes (2), welches wenigstens einen ersten Eingangswandler (10) und einen zweiten Eingangswandler (12) umfasst, wobei der erste Eingangswandler (10) aus einem Schallsignal (14) der Umgebung ein erstes Eingangssignal (16) generiert und der zweite Eingangswandler (12) aus dem Schallsignal (14) ein zweites Eingangssignal (18) generiert,
wobei einer ersten Signalquelle (22) eine erste Richtung (26) zugeordnet wird, wobei anhand des ersten Eingangssignals (16) und des zweiten Eingangssignals (18) ein in der ersten Richtung (26) ausgerichtetes erstes Richtsignal (30) gebildet wird,
wobei wenigstens Signalanteile (34) des ersten Richtsignals (30) auf das Vorhandensein eines Nutzsignals von einer hinsichtlich der Art vorgegebenen Nutzsignalquelle (6) untersucht werden,
wobei für die Untersuchung wenigstens der Signalanteile (34) des ersten Richtsignals (30) auf das Vorhandensein des Nutzsignals spektrale Kenngrößen (38) der Nutzsignalquelle (6) vorgegeben werden, und
wobei ein Wahrscheinlichkeitswert (40) dafür ermittelt wird, dass im ersten Richtsignal (30) Signalkomponenten enthalten sind, welche mit den spektralen Kenngrößen (38) kompatibel sind, und bei einem Überschreiten eines vorgegebenen ersten Grenzwertes durch den Wahrscheinlichkeitswert (40) auf ein Vorhandensein des Nutzsignals geschlossen wird.

2. Verfahren (1) nach Anspruch 1,
wobei bei einem Vorhandensein des Nutzsignals im ersten Richtsignal (30) anhand des ersten Eingangssignals (16) und des zweiten Eingangssignals (16) eine Position der Nutzsignalquelle (6) ermittelt wird, und bei einer ermittelten Änderung der Position der Nutzsignalquelle (6) das erste Richtsignal (30) in Richtung der geänderten Position der Nutzsignalquelle (6) ausgerichtet wird.

3. Verfahren (1) nach Anspruch 1 oder Anspruch 2,
wobei bei einem Vorhandensein des Nutzsignals im ersten Richtsignal (30) die Position der Nutzsignalquelle (6) laufend aktualisiert wird.

4. Verfahren (1) nach einem der vorhergehenden Ansprüche,
wobei die spektralen Kenngrößen (38) vor einer Inbetriebnahme des Hörgeräts (2) in eine Datenbank des Hörgeräts (2) abgelegt werden.

5. Verfahren (1) nach einem der Ansprüche 1 bis 3,
wobei ein Benutzer (4) des Hörgeräts (2) im Betrieb das Nutzsignal der Nutzsignalquelle (6) durch eine Benutzereingabe identifiziert, und die spektralen Kenngrößen (38) anhand des ersten Richtsignals (30) ermittelt und in eine Datenbank abgelegt werden.

6. Verfahren (1) nach einem der Ansprüche 1 bis 3,
wobei im Betrieb des Hörgeräts (2) das Signal der ersten Signalquelle (22) als Nutzsignal identifiziert wird und die erste Signalquelle (22) als Nutzsignalquelle (6) vorgegeben wird, und
wobei die spektralen Kenngrößen (38) der Nutzsignalquelle (6) anhand des ersten Richtsignals (30) ermittelt werden.

7. Verfahren (1) nach einem der vorhergehenden Ansprüche,
wobei anhand des ersten Richtsignals (30) ein Ausgangssignal (44) gebildet wird, welches von wenigstens einem Ausgangswandler (46) des Hörgeräts (2) in ein Schallsignal (48) umgewandelt wird.

8. Verfahren (1) nach einem der vorhergehenden Ansprüche,
wobei als Nutzsignalquelle (6) ein bestimmter Sprecher und als Nutzsignal ein menschliches Sprachsignal des Sprechers vorgegeben werden.

9. Verfahren (1) nach Anspruch 8 mit Anspruch 7,
wobei für das Sprachsignal des bestimmten Sprechers individuelle Korrekturparameter (50) vorgegeben werden, und
wobei bei einem Vorhandensein des Sprachsignals des bestimmten Sprechers im ersten Richtsignal (30) das erste Richtsignal (30) und/oder ein Zwischensignal, welches in das Ausgangssignal (46) eingeht, anhand der individuellen Korrekturparameter (50) korrigiert werden.

10. Verfahren (1) nach Anspruch 9,
wobei die individuellen Korrekturparameter (50) für den bestimmten Sprecher vor einer Inbetriebnahme des Hörgeräts (2) in eine Datenbank des Hörgeräts (2) abgelegt werden, und/oder anhand des ersten Richtsignals (30) und einer Benutzereingabe ermittelt und in eine Datenbank abgelegt werden.

11. Verfahren (1) nach einem der vorhergehenden Ansprüche,
wobei wenigstens Signalanteile des ersten Richtsignals (30) an eine externe Einheit übertragen werden,
wobei die Signalanteile des ersten Richtsignals (30) in der externen Einheit auf das Vorhandensein des Nutzsignals von der hinsichtlich der Art vorgegebenen Nutzsignalquelle (6) untersucht werden, und
wobei das Ergebnis der Untersuchung des ersten Richtsignals (30) an das Hörgerät übermittelt wird.

12. Verfahren (1) nach einem der vorhergehenden Ansprüche,
wobei das erste Richtsignal (30) in die Zeit-Frequenz-Domäne (TFD) transformiert wird und/oder einzelne Zeitabschnitte des ersten Richtsignals (30) in der Zeit-Domäne und/oder der Zeit-Frequenz-Domäne (TFD) auf ein Signal-zu-Rausch-Verhältnis (SNR) hin untersucht werden, und
wobei zur Untersuchung auf das Vorhandensein des Nutzsignals nur Zeitabschnitte mit einem Signal-zu-Rausch-Verhältnis (SNR) herangezogen werden, welches über einem vorgegebenen zweiten Grenzwert liegt.

13. Verfahren (1) nach einem der vorhergehenden Ansprüche,
wobei die erste Richtung (26) zur Zuordnung anhand des ersten Eingangssignals (16) und des zweiten Eingangssignals (18) ermittelt wird.

14. Verfahren (1) nach Anspruch 13,
wobei anhand des ersten Eingangssignals (16) und des zweiten Eingangssignals (18) eine Mehrzahl an winkelabhängigen Richtcharakteristiken mit einem jeweils festem Zentralwinkel und einer gegebenen Winkelaufweitung gebildet werden, wobei die Signalanteile in den einzelnen Richtcharakteristiken auf das Vorhandensein des Signals der ersten Signalquelle (22) hin untersucht werden, und wobei zu einer in einer bestimmten Richtcharakteristik ermittelten ersten Signalquelle (22) der entsprechende Zentralwinkel als erste Richtung (26) zugeordnet wird.

15. Verfahren (1) nach Anspruch 14,
wobei die einzelnen Richtcharakteristiken jeweils durch eine kerbenförmige Empfindlichkeitscharakteristik vorgegeben werden, welche durch wenigstens zwei Bedingungen bestimmt werden, so dass durch die wenigstens zwei Bedingungen jeweils ein Zentralwinkel und eine Winkelaufweitung der Empfindlichkeitscharakteristik festgelegt werden, und wobei die Signalanteile in den einzelnen Richtcharakteristiken jeweils anhand einer relativen Abschwächung durch die Empfindlichkeitscharakteristik auf das Vorhandensein des Signals der ersten Signalquelle (22) untersucht werden.

16. Verfahren (1) nach einem der vorhergehenden Ansprüche,
wobei einer zweiten Signalquelle (24) eine zweite Richtung (28) zugeordnet wird, wobei anhand des ersten Eingangssignals (16) und des zweiten Eingangssignals (18) ein in der zweiten Richtung (28) ausgerichtetes zweites Richtsignal (32) gebildet wird, und
wobei anhand des ersten Richtsignals (30) und des zweiten Richtsignals (32) ein Ausgangssignal (44) gebildet wird, welches von wenigstens einem Ausgangswandler (46) des Hörgeräts (2) in ein Schallsignal (48) umgewandelt wird.

17. Verfahren (1) nach Anspruch 16,
wobei das erste Richtsignal (30) und das zweite Richtsignal (32) als eine Superposition in das Ausgangssignal (44) eingehen.

18. Verfahren (1) nach Anspruch 17,
wobei wenigstens Signalanteile des zweiten Richtsignals (32) auf das Vorhandensein eines Nutzsignals hin untersucht werden, und
wobei die Gewichtung des zweiten Richtsignals (32) relativ zum ersten Richtsignal (30) in der Superposition anhand des Vorhandenseins eines Nutzsignals im zweiten Richtsignal (32) erfolgt.

19. Hörgerät (2), insbesondere binaurales Hörgerät, umfassend wenigstens einen ersten Eingangswandler (10) zur Erzeugung eines ersten Eingangssignals (16) aus einem Schallsignal (14) der Umgebung, einen zweiten Eingangswandler (12) zur Erzeugung eines zweiten Eingangssignals (18) aus dem Schallsignal (14), und eine Signalverarbeitungseinheit, welche zur Durchführung des Verfahrens (1) nach einem der vorgehenden Ansprüche eingerichtet ist.
